# EUROPEAN PATENT SPECIFICATION

(11) **EP 1 209 856 B1**
(45) Date of publication and mention of the grant of the patent: **20.10.2010**
(21) Application number: 01943866.2
(22) Date of filing: 27.06.2001
(51) Int. Cl.: H04L 12/28

(54) **HIGH-SPEED PACKET TRANSMISSION SYSTEM**
HOCHGESCHWINDIGKEITSÜBERTRAGUNGSSYSTEM
SYSTEME DE TRANSMISSION PAR PAQUETS A VITESSE ELEVEE

(30) Priority: 04.07.2000 JP 2000202035
(43) Date of publication of application: 29.05.2002
(73) Proprietor: Panasonic Corporation, Kadoma-shi Osaka 571-8501 (JP)
(72) Inventor: MIYA, Kazuyuki, Asao-ku, Kawasaki-shi, Kanagawa 215-0021 (JP); UE, Toyoki, Yokosuka-shi, Kanagawa 238-0022 (JP)
(74) Representative: Grünecker, Kinkeldey, Stockmair & Schwanhäusser Anwaltssozietät
(86) International application number: PCT/JP2001/005569
(87) International publication number: WO 2002/003617

(56) References cited:
- EP-A- 0 883 266
- JP-A- 10 041 923
- JP-A- 10 210 533
- 3GPP-STANDARDS, 2500 WILSON BOULEVARD, SUITE 300, ARLINGTON, VIRGINIA 22201 USA, 23 June 2000 (2000-06-23), XP040282974
- EDITOR: "3GPP TR 25.922: Radio Resource Management Strategies v 0.6.0" 3GPP DRAFT; R2-99H03, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Sophia Antipolis, France; 19991203, 26 November 1999 (1999-11-26), XP050114139

## Description

### Technical Field

The present invention relates to a fast packet transmission system in a digital radio communication system, and more particularly to a fast packet transmission system by site selection diversity.

### Background Art

With recent advances in internet-related techniques the internet has enabled various services such as music distribution to be provided. Such services increase downlink transmission amounts. In order to achieve such services having increased transmission amounts, great expectations are placed on fast packet transmission over the downlink, and various techniques have been developed on the downlink fast packet transmission.

EP 0 883 266 A2 discloses a mobile supporting router device for realizing the handoff control associated with the moving in high speed. A router device is proposed with an information exchanging unit for exchanging a routing protocol on a network layer, and including a transfer unit for transferring datagram through the first interface according to the information regarding the routing on the network layer. The router further includes an information updating unit for updating the information regarding the routing on the network layer when the moving of the mobile terminal is detected by the moving detection unit.

3GPP standard TR 25.922 v3.2.0 (2000-06) refers to radio resource management strategies including a site selection diversity power control which is a form of power control for the downlink that can be applied while UE is in a soft handover. Site selection diversity power control reduces the downlink interference generated while the UE in soft handover, and is based on the principle that the best cell of the active set is dynamically chosen as the only transmitting site.

The document regarding the Presentation of Specification to the 3GPP standard TR 25.922 for the TSG RAN WG 2 Meeting No. 9 (TSG R2 #9(99) h03) of November 26, 1999 also discloses the site selection diversity power control as described before.

In order to transmit fast packets efficiently, it is considered to improve an average throughput by varying a transmission rate as appropriate by varying channel codec, spreading factor, multiplexing number and (M-ary) modulation scheme corresponding to channel state, using information on the channel state and the like.

Since a symbol rate of a fast packet is high, required transmit power thereof is higher than other channel signals. Therefore, in order to support the fast packet service in the same area as speech service of low symbol rate, transmit power is required to a large extent.

In a CDMA (Code Division Multiple Access) system, a channel for transmitting such fast packets provides large interference with other channels, resulting in a decreased system capacity.

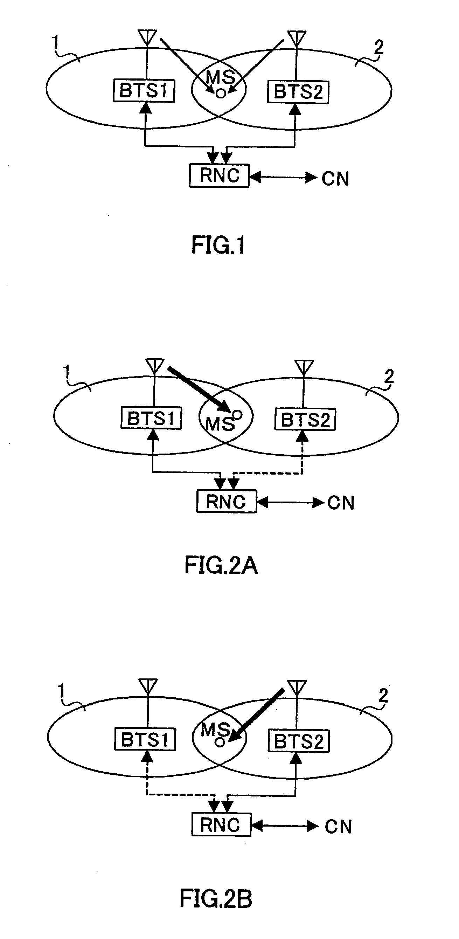

Particularly, as illustrated in FIG.1, in the case of Soft Handover (SHO, also called DHO (Diversity Handover) where a base station (BTS1) of cell 1 and another base station (BTS2) of cell 2 communicate with a communication terminal (MS), such channel signals transmitted concurrently from a plurality of base stations provide large interference with other channels. Meanwhile, packets allow transmission delay as compared with channel exchange signals such as speech. Therefore, generally, SHO is not performed, and as illustrated in FIGs.2A and 2B, Hard Handover (HHO) is performed where transmission is switched between BTS1 of cell 1 and BTS2 of cell 2 (for example, DSCH (Down-link Shared CHannel in the W-CDMA system). In addition, in FIGS.1 and 2 CN denotes a core network.

However, even in the case of performing HHO, in order not to provide an area with a gap, i.e., in order to enable reception always in any portion of the area, it is necessary to maintain channels up to edges of a cover area and to overlap the area and a neighboring area to some extent. This is because a communication terminal needs a channel of a destination area immediately after finishing communications in an original area. During a period that the communication terminal exists in the original area, interference with the destination area is not considered at all. In other words, in SHO, when a signal is transmitted with transmit power more than required, the transmit power is decreased by transmit power control, and it is thereby possible to prevent the interference more than an inevitable level from being imposed on the destination area. In contrast thereto, in HHO, since the interference imposed between sectors is not considered at all, interference is imposed on other channels. Further, since HHO is controlled via a higher layer, a switching speed is lower than SHO. Therefore, HHO is not suitable for a future case of performing packet transmission (packets requiring real-time characteristics such as speech packets and image packets) which allow less transmission delay.

With respect to such issues, a method has been proposed recently of selecting a base station that actually transmits packets fast from a plurality of base stations to switch, while achieving a DHO state on downlink fast packet transmission. In this case, a communication terminal selects a base station providing the highest level ,and notify each base stations of selecting base station on an uplink channel. A base station determines whether the base station is a selected base station from a received selection signal. Then, the base station transmits data only in the case where the base station has determined to be selected, while stopping the transmission except the above case.

It is thereby possible to prevent a plurality of base stations of poor channel state from transmitting, due to DHO, fast packets that are signals with extremely high power, to avoid providing large interference with other stations, and to improve the transmission throughput of the base stations. This is achieved by introducing a concept of fast site selection diversity, where only a base station transmits a signal at a moment (for example, on a frame-by-frame basis), in an SHO state, because extremely large interference is provided when a plurality of base stations of excellent averaged channel state transmits fast packets (SHO state).

In SSDT (Site Selection Diversity Transmit power control) that is conventional fast site selection diversity, DPCH (Dedicated Physical CHannel) is targeted, and RNC determines timing management including transmission scheduling, and controls so that a plurality of BTS transmits signals at the same timing always. Therefore, even when BTS for transmitting signals is switched fast, a communication terminal is capable of receiving frames without disordering the frame number.

As described above, in the conventional system, it is general that a control station (RNC: Radio Network Controller) performs the scheduling function of controlling transmission timings such as frame number of each channel in downlink transmission. Such control is to manage simply corresponding to quality (QoS: Quality of Service) of communication service independently of channel state, and to enable transmission timings in a plurality of base stations to be managed and controlled readily even in soft handover.

However, in the above configuration, it is difficult to perform the scheduling with channel state considered in order to improve packet transmission efficiency. This is because that control delay between base stations and control station is large with respect to a variation in channel state. Accordingly, it has been considered to provide base stations with the scheduling function to perform the scheduling with channel state considered in addition to conventional QoS.

In fast packet transmission, in the case of providing each base station with independent scheduling function corresponding to channel state, there arises a problem that the order (number) of a packet received in a communication terminal differs when base stations transmitting packets are switched fast. This is because the base stations do not have the function of controlling synchronization of transmit order such as packet number.

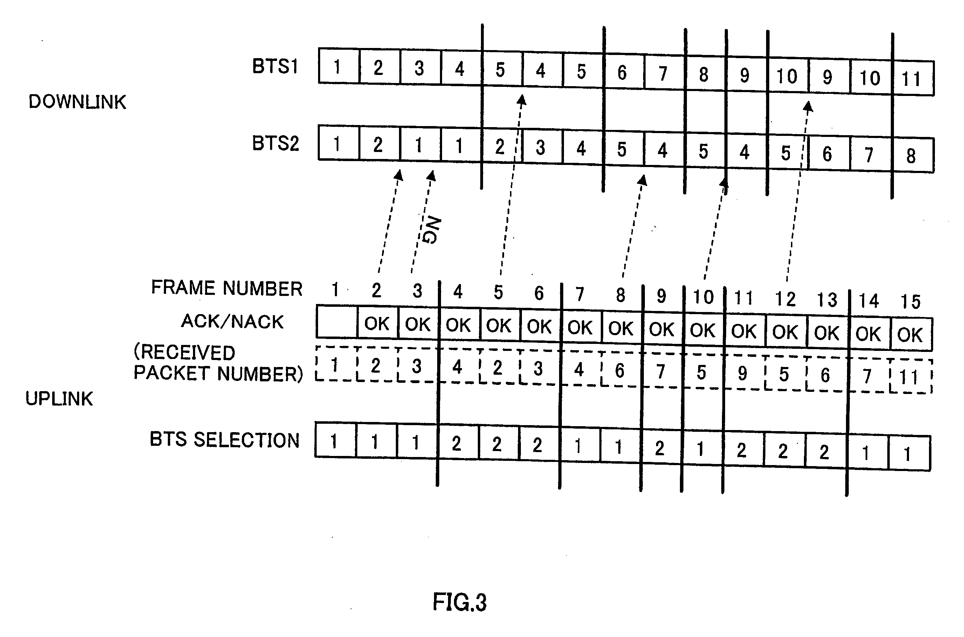

This phenomenon will be described with reference to FIG.3. In order to clarify the description, it is herein assumed that a Go-Back-N scheme is used as a repeat error correcting algorithm, and that base station selection signals and downlink fast packet signals are transmitted without errors. In FIG.3, broken lines indicate that uplink ACK signals are not transmitted correctly to base stations. Thick lines indicate switching timings of base station selection by a communication terminal and timings at which the base stations transmitting downlink signals are switched with one-frame control delay based on the selection information.

In FIG.3, over the downlink, BTS1 selected due to good channel state transmits packets 1 to 4 in frames 1 to 4. The communication terminal receives a packet of number 1 in frame 1, and transmits an ACK signal for the packet of number 1 in frame 2 over the uplink. It is assumed that this ACK signal arrives at BTS1 of good channel state without an error, while arriving at BTS2 of poor channel state with an error (leftward broken line as viewed in the figure). Since BTS2 has not received the ACK signal for the packet of number 1, BTS2 determines that the packet of number 1 does not reach the terminal, and prepares the packet of number 1 again in frame 3.

Next, the communication terminal receives a packet of number 2 in frame 2, and transmits an ACK signal for the packet of number 2 in frame 3 over the uplink. It is assumed that this ACK signal arrives at BTS1 of good channel state without an error, while arriving at BTS2 of poor channel state again with an error (second left broken line as viewed in the figure). Since BTS2 has not received the ACK signal for the packet of number 1 supposed to be retransmitted from BTS2, BTS2 determines that the packet of number 1 does not reach the terminal yet, and prepares the packet of number 1 again in frame 4. Then, BTS2 determines that the packet of number 1 is correctly received only after receiving the ACK signal of frame 4, and prepares packets of number 2 and following numbers in order starting frame 5.

When the communication terminal selects BTS2 in frames 4 to 6, BTS2 transmits downlink packets in frames 5 to 7. At this point, since BTS2 does not know that BTS1 has transmitted packets of numbers 1 to 4, BTS2 transmits the packet of number 2 in frame 5 to follow the packet of number 1 transmitted in frame 4 before the switching.

The communication terminal receives the packet of number 4 in frame 4, and transmits an ACK signal for the packet of number 4 in frame 5 over the uplink. It is assumed that this ACK signal arrives at BTS2 of good channel state without an error, while arriving at BTS1 of poor channel state with an error (third left broken line as viewed in the figure). Since BTS1 has not received the ACK signal for the packet of number 4, BTS1 determines that the packet of number 4 does not reach the terminal, and prepares the packet of number 4 again in frame 6. Then, BTS1 prepares packets of number 4 and following numbers in order.

When the communication terminal selects BTS1 in frames 7 and 8, BTS1 transmits downlink packets in frames 8 and 9. At this point, BTS1 does not know that BTS2 has transmitted packets of number 2 to 4, BTS1 transmits a packet of number 6 to follow the packet of number 5 transmitted before the switching.

The communication terminal receives the packet of number 4 in frame 7, and transmits an ACK signal for the packet of number 4 in frame 8 over the uplink. It is assumed that this ACK signal arrives at BTS1 of good channel state without an error, while arriving at BTS2 of poor channel state with an error (fourth left broken line as viewed in the figure). Since BTS2 has not received the ACK signal for the packet of number 4, BTS2 determines that the packet of number 4 does not reach the terminal, and prepares the packet of number 4 again in frame 9. Then, BTS2 prepares packets of number 4 and following numbers in order.

It is assumed that the above operation is continued in frame 10 and thereafter.

When base stations are thus provided with the scheduling function, since the base stations do not have a function of controlling synchronization of transmit order such as packet number, as can be seen from received packet numbers in FIG.3, the order (number) of packets received in a communication terminal seriously differs, and further information of the same packet number is received a plurality of times, resulting in extremely poor transmission efficiency.

Generally, in packet reception, since a communication terminal as a receiving side transmits an ACK signal or NACK signal respectively indicative of success or failure of reception of a packet, the packet transmitting order is kept when these signals arrive at a plurality of base stations without an error.

However, in order to achieve the foregoing, it is necessary to exceedingly increase the transmit power of the ACK and NACK signals over the uplink, or to protect these signals with error correction of extremely low coding rate. In either method, large interference is provided with other stations, spectral efficiency is remarkably decreased, and therefore it is difficult to achieve the methods.

### Disclosure of Invention

It is an object of the present invention to provide a fast packet transmission system capable of controlling synchronization of transmit order such as packet number between base stations while providing the base stations with the scheduling function.

The inventors of the present invention noted that when controlling synchronization of transmit order such as packet number between base stations while providing the base stations with the scheduling function, each base station is only required to recognize a packet number to be transmitted next when the base station is next selected and transmits a packet to a communication terminal, found out by transmitting information to manage the packet transmit order along with an ACK signal or NACK signal that is a confirmation signal, it is possible to make a base station recognize the packet transmit order when the base station is next selected and transmits a packet to a communication terminal, and to control the synchronization of packet transmit order, and carried out the present invention.

It is a gist of the present invention that in a system for performing downlink fast packet transmission efficiently by fast site selection diversity, added to a control signal is information for base stations tomanage the packet transmit order, for example, an IP (Internet Protocol) packet number or a number newly assigned for radio transmission, each of the base stations manages the information individually, and thereby the base stations keep (acquire synchronization of) the packet transmit order.

In this way, it is possible to control synchronization of transmit order such as packet number between base stations while providing each of the base stations with the scheduling function. As a result, in fast packet transmission, it is possible to suppress a decrease in rate on a cell edge or corresponding to propagation environment, increase a throughput of transmission, suppress interference imposed on other stations, and achieve fast transmission per channel and an increased system capacity.

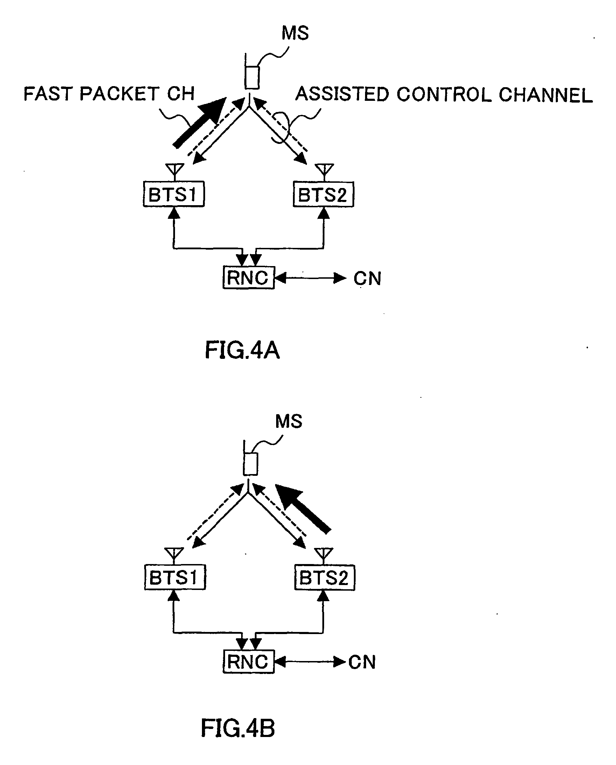

A channel configuration is not limited in particular when a base station transmits information to manage the packet transmit order. For example, as shown in FIGs.4A and 4B, it may be possible that a fast packet transmission channel (fast packet CH in the figure, or DSCH in W-CDMA) is provided with a assisted control channel, and that base stations transmit the information to manage the packet transmit order using the assisted control channel (downlink: thin solid line). Further, it may be possible to transmit information on modulation pattern or transmission rate using the assisted control channel.

Over the uplink, the assisted control channel is used to transmit the ACK signal and NACK signal, base station selection signal, downlink request transmission rate information, information on packet number (or check signal), etc. It may be possible to transmit the information using a plurality of channels (codes). For example, taking a transmission error into account, the base station selection signal and information on packet number may be transmitted on a channel providing an extremely low transmission error rate, and the other information may be transmitted on another channel with relatively low reliability.

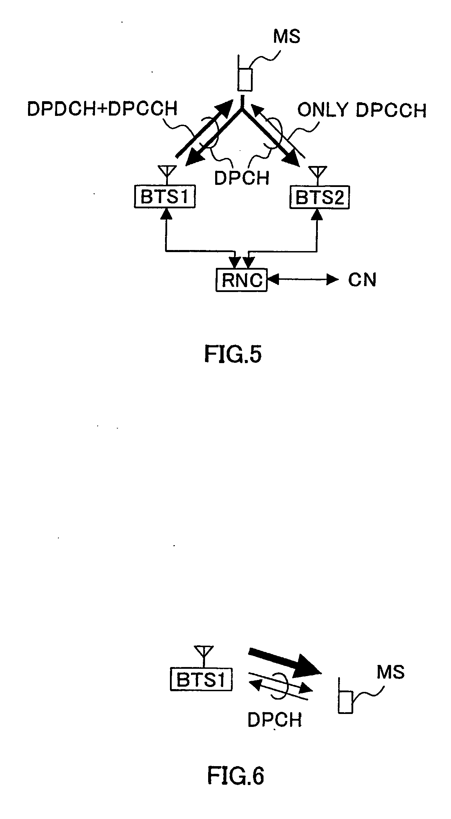

Further, as shown in FIG.5, in DSCH the assisted control channel is a dedicated physical channel (DPCH). In this case, as the assisted control channel, it may be possible to share a control channel common to other users in time division.

In addition, as the assisted control channel, in W-CDMA, for example, a dedicated control channel (DPCH) and common control channel are available.

SSDT will be described below that is a conventional fast site selection diversity. In SSDT, as shown in FIG.6, a communication terminal measures a channel state (for example, RSCP (received power) of CPICH (Common Pilot CHannel) with each base station in DHO, selects a base station (referred to as Primary BTS) providing the highest level, and transmits the ID code (FBI: Feedback Indicator) of the base station as an uplink signal.

A base station determines whether or not the base station is selected from the received FBI signal (ID code). In the case of determining that the base station is selected, the base station transmits data (on DPDCH: Dedicated Physical Data CHannel), and in cases except the above case, stops the transmission or transmits only a control signal (on DPCCH: Dedicated Physical Control CHannel).

In this way, it is possible to eliminate the system waste that a base station of poor channel state transmits signals with high power in DHO, thereby providing large interference with other stations, while improving little the channel state of the base station. However, when a base station makes an erroneous determination due to a high error rate on uplink FBI regardless of the fact that the base station is selected, data is not transmitted from either base station during the selection period. In such a case, a concern rises that channel quality deteriorates in real time transmission such as speech transmission. Therefore, only when a base station determines that the base station is not selected from a plurality of conditions, the base station stops transmission or transmits only a control signal (on DPCCH). In addition, SSDT prescribes the application of DPCCH including FBI and DPCH (Dedicated Physical CHannel) having DPDCH.

A fast packet transmission system according to one embodiment of the present invention adopts a configuration where a communication terminal transmits base station selection information on a base station that the communication terminal has selected corresponding to the channel state, and information to manage the transmit order to the base station over the uplink, and the base station selected with the base station selection information transmits a packet over the downlink according to the information to manage the transmit order.

According to this configuration, in a system for performing downlink fast packet transmission efficiently by fast site selection diversity, the information for base stations to manage the packet transmit order is transmitted, each of the base stations manages the information individually, and thereby the base stations keep (acquire synchronization of) the packet transmit order. Therefore, it is possible to control synchronization of transmit order such as packet number between base stations while providing each of the base stations with the scheduling function.

A fast packet transmission system according to another embodiment of the present invention adopts a configuration, in the above configuration, where the information to manage the transmit order is transmitted to the base stations only when a base station that transmits a downlink signal is selected with the base station selection information.

According to this configuration, a packet number is not transmitted except a time the base station is switched, thereby enabling improved transmission efficiency.

A fast packet transmission system according to another embodiment of the present invention adopts a configuration, in the above configuration, where the information to manage the transmit order is at least one of the packet number and a check signal to be transmitted after a packet is received correctly.

A fast packet transmission system according to another embodiment of the present invention adopts a configuration, in the above configuration, where a communication terminal transmits an adaptive modulation pattern with the information to manage the transmit order to the base station.

According to this configuration, even when a first transmission of a newly selected base station is a repeat of a packet transmitted by a last selected base station, since an adaptive modulation pattern is transmitted to the new base station, the new base station is capable of repeating a signal with the same adaptive modulation pattern.

A fast packet transmission system according to another embodiment of the present invention adopts a configuration, in the above configuration, where a communication terminal apparatus transmits an adaptive modulation pattern with the information to manage the transmit order to the base station only when a base station that transmits a downlink signal is selected with the base station selection information.

According to this configuration, the new base station is capable of repeating a signal with the same adaptive modulation pattern. Therefore, the communication terminal on a receiving side is capable of combining packets (combining soft decision values of previously received signals and a soft decision value of a repeated received signal to demodulate), and of improving the throughput.

A fast packet transmission system according to another embodiment of the present invention adopts a configuration where only when a base station that transmits a downlink signal is selected with the base station selection information and a repeat of a packet that is erroneous in last receiving the packet is requested to the selected base station, a communication terminal transmits an adaptive modulation pattern with the information to manage the transmit order to the base station.

According to this configuration, since it is not necessary to transmit the adaptive modulation pattern to a new base station except repeat, it is possible to transmit the adaptive modulation pattern only when a received packet is NG (NACK) without transmitting the adaptive modulation pattern when a received packet is OK (ACK). It is thereby possible to prevent the transmission of wasteful information bit and to improve the spectral efficiency.

A fast packet transmission system according to another embodiment of the present invention adopts a configuration, in the above configuration, where the information to manage the transmit order is transmitted with transmit power higher than transmit power of other information.

According to this configuration, it is possible to decrease or prevent transmission error of the information to manage the transmit order, and to improve the transmission efficiency.

A fast packet transmission system according to another embodiment of the present invention adopts a configuration, in the above configuration, where base stations and a control station that controls the base stations are provided with a restriction for synchronization, and based on the restriction, the base stations perform transmission.

Also according to this configuration, it is possible to prevent the transmit order from differing between the base stations. Further, the control station treats a repeat packet as a new packet to transmit to a base station, and it is thereby possible to prevent the difference from occurring due to the repeat.

A base station apparatus according to one embodiment of the present invention adopts a configuration provided with a receiving section that receives base station selection information on a base station that a communication terminal has selected corresponding to the channel state and information to manage the transmit order, transmission control section that controls a packet to be transmitted according to the information to manage the transmit order, and a transmitting section that transmits the packet output from the transmission control section when the base station apparatus is selected with the base station selection information.

According to this configuration, in a system for performing downlink fast packet transmission efficiently by fast site selection diversity, the information for base stations to manage the packet transmit order is transmitted, each of the base stations manages the information individually, and thereby the base stations keep (acquire synchronization of) the packet transmit order. Therefore, it is possible to control synchronization of transmit order such as packet number between base stations while providing the base stations with the scheduling function.

A communication terminal according to one embodiment of the present invention adopts a configuration provided with a selecting section that selects a base station that transmits a packet in a next transmission unit, corresponding to the channel state, and a transmitting section that transmits information to manage the transmit order with transmit data to the base station.

According to this configuration, transmitting the information to manage the transmit order to base stations enables the base stations to keep (acquire synchronization of) the packet transmit order. Therefore, it is possible to achieve synchronization of transmit order such as packet number between base stations while providing the base stations with the scheduling function.

A communication terminal apparatus according to another embodiment of the present invention in the above configuration transmits the information to manage the transmit order to the base stations only when a base station that transmits a downlink signal is selected.

According to this configuration, a packet number is not transmitted except a time the base station is switched, thereby enabling improved transmission efficiency.

### Brief Description of Drawings

FIG.1 is a diagram to explain the soft handover;
FIG.2A is another diagram to explain the hard handover;
FIG.2B is another diagram to explain the hard handover;
FIG.3 is a diagram to explain packet transmission states in a conventional fast packet transmission system;
FIG.4A is a diagram to explain a channel configuration in a fast packet transmission system of the present invention;
FIG.4B is another diagram to explain a channel configuration in the fast packet transmission system of the present invention;
FIG.5 is another diagram to explain a channel configuration in the fast packet transmission system of the present invention;
FIG.6 is another diagram to explain a channel configuration in the fast packet transmission system of the present invention;
FIG.7 is a block diagram to explain a configuration of a base station apparatus in a fast packet transmission system according to a first embodiment of the present invention;
FIG.8 is a block diagram to explain a configuration of a communication terminal apparatus in the fast packet transmission system of the present invention;
FIG.9 is a diagram to explain packet transmission states in the fast packet transmission system according to the first embodiment of the present invention;
FIG.10 is another diagram to explain packet transmission states in the fast packet transmission system according to the first embodiment of the present invention;
FIG.11 is a block diagram to explain a configuration of a base station apparatus in a fast packet transmission system according to a second embodiment of the present invention; and
FIG.12 is a diagram to explain packet transmission states in the fast packet transmission system according to the second embodiment of the present invention.

### Best Mode for Carrying Out the Invention

Embodiments of the present invention will be described specifically below with reference to accompanying drawings.

### (First embodiment)

This embodiment describes a case where added to an uplink control signal from a communication terminal is information for base stations to manage the packet transmit order, for example, an IP (Internet Protocol) packet number or a number newly assigned for radio transmission, and each of the base stations controls the information individually, thereby enabling the synchronization between a plurality of base stations.

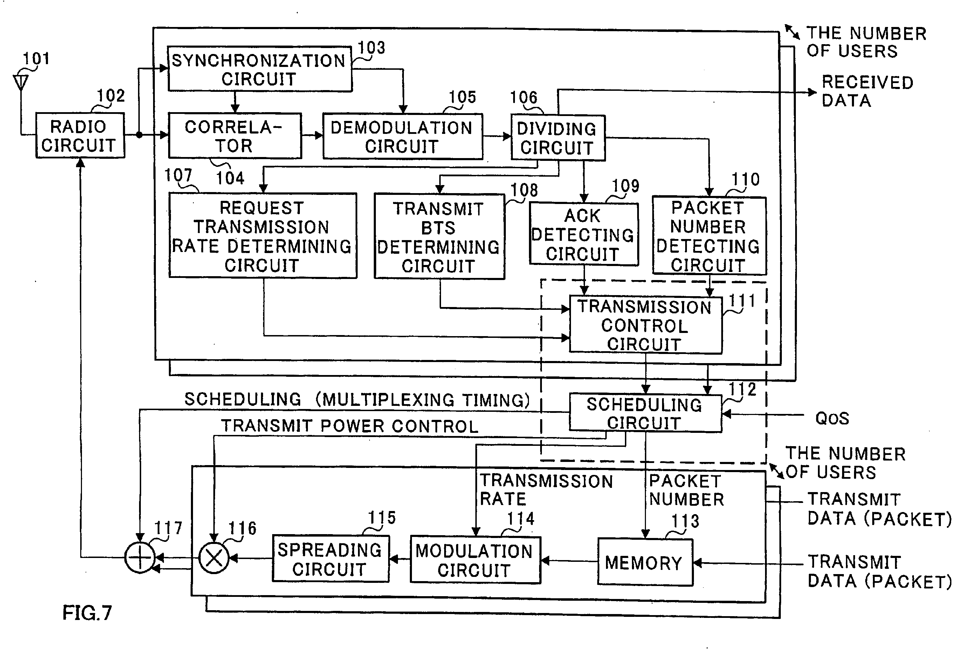

FIG.7 is a block diagram to explain a configuration of a base station apparatus in a fast packet transmission system according to the first embodiment of the present invention. In FIG.7, a series of transmission elements for a channel for transmitting fast packets is only indicated, and a series of transmission elements for a assisted control channel is omitted.

The base station apparatus (hereinafter referred to as base station) illustrated in FIG. 7 receives an uplink signal from a communication terminal apparatus (hereinafter referred to as communication terminal) as a communication party in radio circuit 102 via antenna 101. Radio circuit 102 performs the predetermined radio reception processing (such as downconverting and A/D conversion) on the received signal. The signal subjected to the radio reception processing is output to correlator 104.

Correlator 104 despreads the signal subjected to the radio reception processing with a spreading code used in the spreading in the communication terminal. The despread signal is output to demodulation circuit 105. Demodulation circuit 105 performs demodulation using the despread signal. The demodulated signal (demodulated data) is output to dividing circuit 106. The signal subjected to the radio reception processing is also output to synchronization circuit 103, and the circuit 103 controls timings of despreading and demodulation. The timing information is output to correlator 104 and demodulation circuit 105. Accordingly, correlator 104 and demodulation circuit 105 respectively perform despreading and demodulation according to the timing information.

Dividing circuit 106 divides the demodulation data into data of information on transmission rate that the communication terminal requests, of information on base station requested to transmit data, of information on packet number or the like, ACK signal and received data. The information on transmission rate (transmit pattern including a modulation pattern, channel codec pattern, and the number of multiplexed codes : adaptive modulation pattern) that the communication terminal requests is output to request transmission rate determining circuit 107, the information on base station requested to transmit data is output to transmit BTS determining circuit 108, the ACK signal is output to ACK detecting circuit 109, and the information on packet number or the like is output to packet number detecting circuit 110.

Request transmission rate determining circuit 107 determines a transmission rate that the communication terminal requests from the information on transmission rate divided from the received signal, and outputs information on the determined transmission rate to transmission control circuit 111.

Transmit BTS determining circuit 108 determines a base station that transmits a signal in a next transmission unit based on the information on base station requested to transmit data divided from the received signal, and outputs information on the determined base station to transmission control circuit 111.

ACK detecting circuit 109 detects the ACK signal divided from the received signal, and outputs the detected result to transmission control circuit 111. Packet number detecting circuit 110 detects the information on packet number or the like requested from the communication terminal, and outputs the detected result to transmission control circuit 111.

In addition, circuits from synchronization circuit 103 to transmission control circuit 111 is provided for each user.

Transmission control circuit 111 controls transmission of data to transmit to the communication terminal based on the information on the determined transmission rate, the information on the determined base station, the result indicative of whether the ACK signal is received and the packet number. The information on each data transmission for each user is output to scheduling circuit 112.

Based on the information on each data transmission for each user, scheduling circuit 112 allocates data transmission. In this case, taking account of QoS, channel state and system capacity, data transmission allocation (which packet is transmitted to which communication terminal) is performed. Information on the allocation (scheduling information indicative of timing, communication terminal, and transmit pattern for use in transmission) is output to memory 113 and modulation circuit 114.

Memory 113 stores transmit data (packet data), and outputs the data to modulation circuit 114 according to the scheduling information from scheduling circuit 112. Modulation circuit 114 modulates the data output from memory 113 by the modulation scheme according to the scheduling information. The modulated data is output to spreading circuit 115, and the circuit 115 spreads the data with a predetermined spreading code. The spread data undergoes the predetermined transmit power control in multiplier 116, in other words, the transmit power control according to the scheduling information, and is output to adder 117.

In addition, memory 113, modulation circuit 114 spreading circuit 115, and multiplier 116 are provided for each user.

Adder 117 multiplexes data for users, for example, by time multiplexing or code multiplexing. The data thereby becomes a fast packet signal. Adder 117 multiplexes the fast packet signal and other channel signal to output to radio circuit 102. Radio circuit 102 performs the predetermined radio transmission processing (such as D/A conversion and upconverting) on the data to be transmitted. The signal subjected to the radio transmission processing is transmitted to a communication terminal via antenna 101.

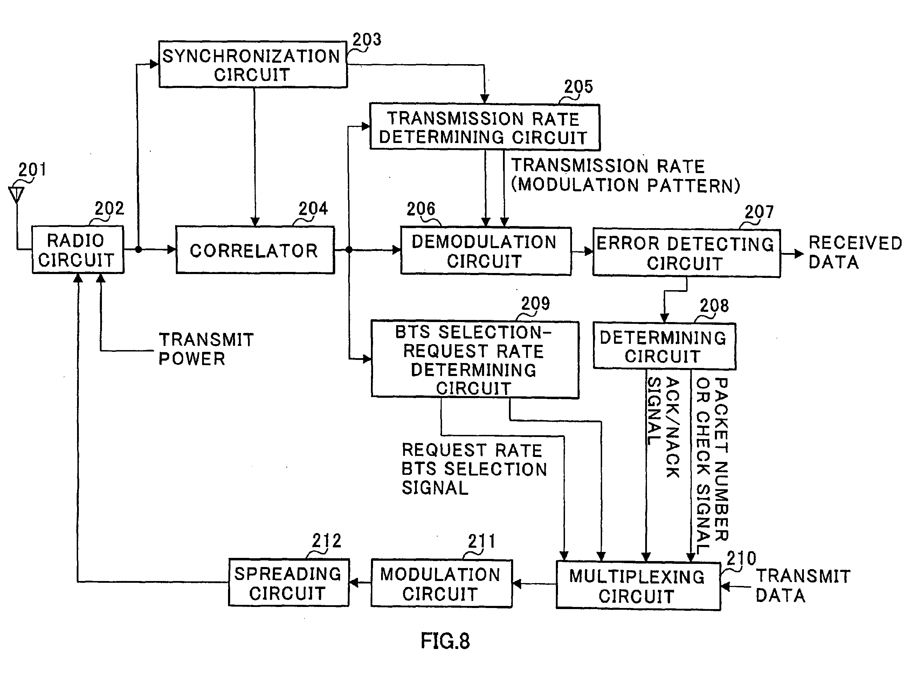

FIG.8 is a block diagram to explain a configuration of a communication terminal apparatus in the fast packet transmission system of the present invention. A case will be described where transmission rate determination, fast packet reception and BTS selection is performed using the same channel (code). However, in the present invention it may be possible to provide different correlators to perform transmission rate determination, fast packet reception and BTS selection using different channels (codes).

The communication terminal apparatus (hereinafter referred to as communication terminal) illustrated in FIG.8 receives a downlink signal from the base station as a communication party in radio circuit 202 via antenna 201. Radio circuit 202 performs the predetermined radio reception processing (such as downconverting and A/D conversion) on the received signal. The signal subjected to the radio reception processing is output to correlator 204.

Correlator 204 despreads the signal subjected to the radio reception processing with a spreading code used in the spreading in the communication terminal. The despread signal is output to transmission rate determining circuit 205, demodulation circuit 206 and BTS selection-request rate determining circuit 209.

Using the despread signal, transmission rate determining circuit 205 determines a transmission rate. The transmission rate is of a transmit pattern (adaptive modulation pattern) including a modulation pattern, channel codec pattern and the number of multiplexed codes. The information on the determined transmission rate is output to demodulation circuit 206. Using the despread signal, demodulation circuit 206 performs demodulation corresponding to the adaptive modulation pattern determined in transmission rate determining circuit 205. The demodulated signal (received data) is output to error detecting circuit 207.

The signal subjected to the radio reception processing is also output to synchronization circuit 203, and the circuit 203 controls timings of despreading and transmission rate determination. The timing information is output to correlator 204 and transmission rate determining circuit 205. Accordingly, correlator 204 and transmission rate determining circuit 205 respectively perform despreading and transmission rate determination according to the timing information.

Error detecting circuit 207 performs error detection on the demodulated data to obtain received data. As the error detection, for example, CRC (Cyclic Redundancy Check) is usable. Further, the error-detected data is output to determining circuit 208. Determining circuit 208 determines a packet number added to the received data (packet). Further, determining circuit 208 outputs an ACK signal to multiplexing circuit 201 when no error detected in the packet, while outputting a NACK signal to multiplexing circuit 210 when an error is detected in the packet. Furthermore, determining circuit 208 outputs the received packet number (check signal in a second embodiment described later) to multiplexing circuit 210.

Meanwhile, the despread signal is output to BTS selection-request rate determining circuit 209. Using the despread signal, BTS selection-request rate determining circuit 209 estimates a channel state, and based on the estimated result, selects a base station which transmits a packet in a next transmission unit. Further, based on the estimated channel state, BTS selection-request rate determining circuit 209 determines a transmission rate (adaptive modulation pattern) for use in transmitting a packet from the base station. The BTS selection signal and information on request rate is output to multiplexing circuit 210.

Multiplexing circuit 210 multiplexes the transmit data, BTS selection signal, request rate information, ACK signal or NACK signal, and packet number or check signal to output to modulation circuit 211. According to the transmission rate (adaptive modulation pattern), modulation circuit 211 modulates the transmit data and the above-mentioned information. The modulated data is output to spreading circuit 212. Spreading circuit 212 spreads the data with a predetermined spreading code. The spread data is output to radio circuit 202. Radio circuit 202 performs the predetermined radio transmission processing (such as D/A conversion and upconverting) on the data to be transmitted. The signal subjected to the radio transmission processing is transmitted to the communication terminal via antenna 201.

The operation in the fast packet transmission system with the above configuration will be described next. Base station selection herein means selection of a site or sector, and is to select an optimal site or sector when a single base station has a plurality of sites or sectors. Accordingly, the base station selection in the present invention is not limited to a case of simply selecting a physical base station apparatus.

First, the communication terminal estimates a channel state from a received signal, selects a base station which transmits a packet in a next transmission unit based on the estimated result, and determines a transmission rate (adaptive modulation pattern) for use in the transmission. Then, the communication terminal transmits the BTS selection signal and request rate to the base station. At this point, the communication terminal also transmits the information on packet number that the terminal requests to transmit in the next transmission unit.

In the base station, a base station which transmits a packet in the next transmission unit is determined based on the information on base station requested to transmit the packet divided from the received signal, and the information on the determined base station is output to transmission control circuit 111. The ACK signal divided from the received signal is detected, and the detected result is output to transmission control circuit 111. The information on packet number or the like that the communication terminal requests to transmit divided from the received signal is detected, and the detected result is output to transmission control circuit 111.

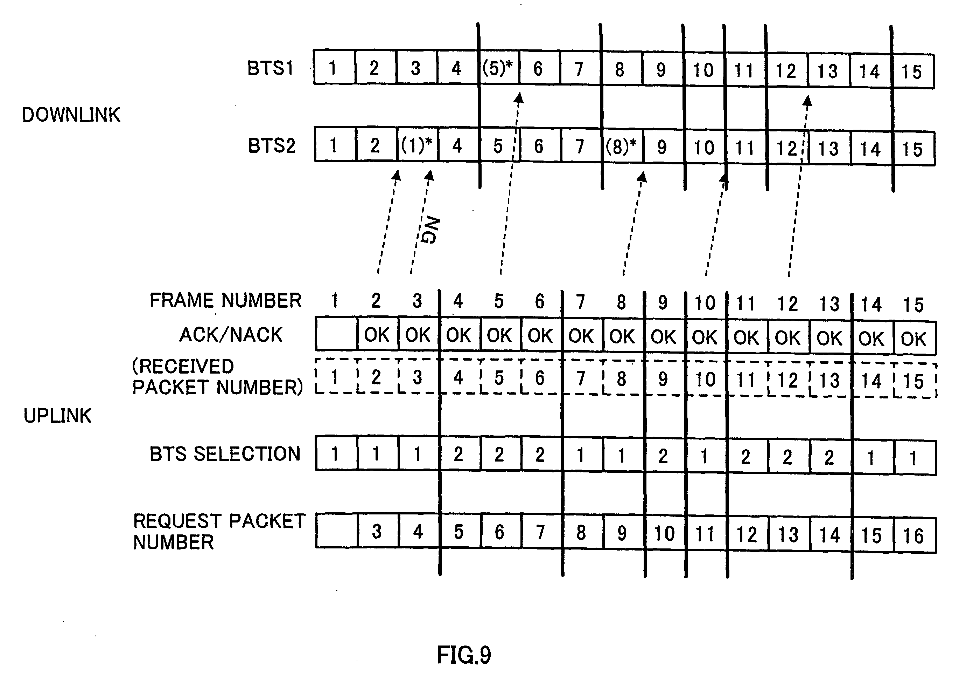

Transmission control circuit 111 controls transmission of data to be transmitted to the communication terminal based on the information on the determined base station, the result indicative of whether the ACK signal is received and the packet number. The transmission control will be described below with reference to FIG.9. FIG.9 is a diagram to explain transmission states in the fast packet transmission system according to the first embodiment of the present invention. In order to clarify the description, it is herein assumed that the Go-Back-N scheme is used as a repeat error correcting algorithm, and that base station selection signals, downlink fast packet signals and request packet numbers in switching base station selection are transmitted without errors. In FIG.9, broken lines indicate that uplink ACK signals are not transmitted correctly to base stations. Thick lines indicate switching timings of base station selection by a communication terminal and timings at which the base stations transmitting downlink signals are switched with one-frame control delay based on the selection information.

In this transmission control, it is not necessarily required that packet numbers are always correctly transmitted to a plurality of base stations, unlike order management by ACK and NACK, and only a base station that transmits a packet in a next transmission unit (transmit timing) needs to receive the packet number without an error, thereby readily achieving the synchronization between base stations on transmit order.

In FIG.9, over the downlink, BTS1 selected due to good channel state transmits packets 1 to 4 in frames 1 to 4. The communication terminal receives a packet of number 1 in frame 1, and transmits an ACK signal for the packet of number 1 in frame 2 over the uplink. At this point, the communication terminal transmits the BTS selection signal (BTS1) and request packet number (packet number 3) with the ACK signal.

It is assumed that this ACK signal arrives at BTS1 of good channel state without an error, while arriving at BTS2 of poor channel state with an error (leftward broken line as viewed in the figure). Since BTS2 has not received the ACK signal for the packet of number 1, BTS2 determines that the packet of number 1 does not reach the terminal, and prepares the packet of number 1 again (1) * (packet number determined only by the ACK signal when BTS2 is not selected). At this point, since packet number 3 that the communication terminal requests is transmitted in an uplink signal, BTS2 is capable of recognizing that the communication terminal requests a packet of number 3 in this transmission unit. In this way, regardless of mistaking a request packet number, BTS2 is capable of correcting the transmit order, thereby enabling acquisition of synchronization in transmission between BTS1 and BTS2.

Next, the communication terminal receives a packet of number 2 in frame 2, and transmits an ACK signal for the packet of number 2 in frame 3 over the uplink. At this point, the communication terminal transmits the BTS selection signal (BTS1) and request packet number (packet number 4) with the ACK signal. It is assumed that this ACK signal arrives at BTS1 of good channel state without an error, while arriving at BTS2 of poor channel state again with an error (second left broken line as viewed in the figure). Since BTS2 has recognized that the communication terminal requests a packet of number 4 even without receiving the ACK signal for the packet of number 2, BTS2 prepares a packet of number 4 in a next transmission unit.

Next, the communication terminal receives a packet of number 3 in frame 3, and transmits an ACK signal for the packet of number 3 in frame 4 over the uplink. At this point, the communication terminal transmits the BTS selection signal (BTS2) and request packet number (packet number 5) with the ACK signal. When the communication terminal selects BTS2 in frames 4 to 6, BTS2 transmits downlink packets in frames 5 to 7.

Since BTS1 has recognized that a packet that the communication terminal requests is a packet of number 4, BTS1 transmits a packet of number 4 in frame 4 to the communication terminal. The communication terminal receives the packet of number 4, and transmits an ACK signal for the packet of number 4 in frame 5 over the uplink. At this point, the communication terminal transmits the BTS selection signal (BTS2) and request packet number (packet number 6) with the ACK signal.

It is assumed that this ACK signal arrives at BTS2 of good channel state without an error, while arriving at BTS1 of poor channel state with an error (third left broken line as viewed in the figure). Since BTS1 is capable of recognizing that the communication terminal requests a packet of number 6 even without receiving the ACK signal for the packet of number 4, BTS1 prepares the packet of number 6 in a next transmission unit. In this way, regardless of mistaking a request packet number, BTS1 is capable of correcting the transmit order, thereby enabling acquisition of synchronization in transmission between BTS1 and BTS2.

Next, the communication terminal receives a packet of number 6 in frame 6, and transmits an ACK signal for the packet of number 6 in frame 7 over the uplink. At this point, the communication terminal transmits the BTS selection signal (BTS1) and request packet number (packet number 8) with the ACK signal. When the communication terminal selects BTS1 in frames 7 and 8, BTS1 transmits downlink packets in frames 8 and 9.

Since BTS2 has recognized that a packet that the communication terminal requests is a packet of number 7, BTS2 transmits a packet of number 7 in frame 7 to the communication terminal. The communication terminal receives the packet of number 7, and transmits an ACK signal for the packet of number 7 in frame 8 over the uplink. At this point, the communication terminal transmits the BTS selection signal (BTS1) and request packet number (packet number 9) with the ACK signal.

It is assumed that this ACK signal arrives at BTS1 of good channel state without an error, while arriving at BTS2 of poor channel state with an error (fourth left broken line as viewed in the figure). Since BTS2 is capable of recognizing that the communication terminal requests a packet of number 9 even without receiving the ACK signal for the packet of number 7, BTS2 prepares the packet of number 9 in a next transmission unit. In this way, regardless of mistaking a request packet number, BTS2 is capable of correcting the transmit order, thereby enabling acquisition of synchronization in transmission between BTS1 and BTS2.

It is assumed that the operation as described above is continued in frame 10 and thereafter.

Thus, by performing the transmission control as described above, it is possible in the fast packet transmission system to control synchronization of transmit order such as packet number between base stations, while providing the base stations with the scheduling function.

In this embodiment a packet number that the communication terminal requests may be transmitted as an uplink signal at the same time as the BTS selection signal, or may be transmitted as an uplink signal at the same time as the ACK signal or NACK signal. Thus, the communication terminal transmits a packet number that the communication terminal requests as an uplink signal at the same time as the BTS selection signal and/or ACK signal/NACK signal with less error than the ACK signal. In this way, as compared with the case of acquiring synchronization of transmit order of packet signals between base stations using only ACK signals as illustrated in the conventional, it is possible to prevent the order (numbers) of transmission packets from differing between base stations, and to improve transmission efficiency (increase throughput) such as eliminating a plurality of receptions of a packet of the same number in the communication terminal.

Further in this embodiment, also when a downlink packet signal is erroneous and an ACK signal is not returned, the communication terminal may transmit a packet number that the communication terminal requests as an uplink signal. In this case, since the base station is capable of determining no ACK signal arriving as a transmission error of the downlink packet signal, the communication terminal does not need to transmit a NACK signal necessarily.

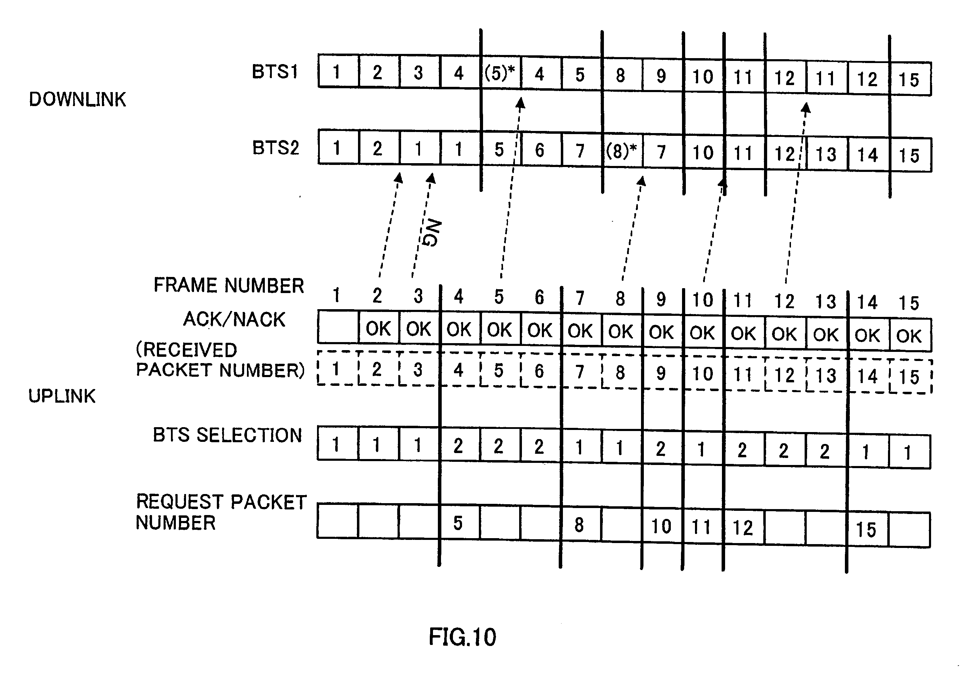

In this embodiment, as illustrated in FIG.10, it may be possible to transmit a packet number only when a base station transmitting a packet is switched. In this way, since a packet number is not transmitted except the time a base station transmitting a packet is switched, the spectral frequency can be improved. At this point, by transmitting the information on packet number with higher transmit power than a channel for transmitting another information, it is possible to decrease or prevent the transmission error of packet number, and to further improve the spectral efficiency.

In FIG.10, over the downlink, BTS1 selected due to good channel state transmits packets 1 to 4 in frames 1 to 4. The communication terminal receives a packet of number 1 in frame 1, and transmits an ACK signal for the packet of number 1 in frame 2 over the uplink.

It is assumed that this ACK signal arrives at BTS1 of good channel state without an error, while arriving at BTS2 of poor channel state with an error (leftward broken line as viewed in the figure). Since BTS2 has not received the ACK signal for the packet of number 1, BTS2 determines that the packet of number 1 does not reach the terminal, and prepares the packet of number 1 again in frame 3.

Next, the communication terminal receives a packet of number 3 in frame 3, and transmits an ACK signal for the packet of number 3 in frame 4 over the uplink. At this point, the communication terminal transmits the BTS selection signal (BTS2) and request packet number (packet number 5) with the ACK signal. When the communication terminal selects BTS2 in frames 4 to 6, BTS2 transmits downlink packets in frames 5 to 7.

At this point, since packet number 5 that the communication terminal requests is transmitted over the uplink, BTS2 is capable of recognizing that the communication terminal requests a packet of number 5 in a next transmission unit. In this way, BTS2 is capable of correcting the transmit order, thereby enabling acquisition of synchronization in transmission between BTS1 and BTS2. In addition, at this point, BTS1 receives erroneous request packet number, and prepares a packet of number 5 by making a determination only from the ACK signal.

Next, the communication terminal receives a packet of number 4 in frame 4. Then, the communication terminal transmits an ACK signal for the packet of number 4 in frame 5 over the uplink, and transmits the BTS selection signal (BTS2) with the ACK signal. It is assumed that this ACK signal arrives at BTS2 of good channel state without an error, while arriving at BTS1 of poor channel state again with an error (third left broken line as viewed in the figure).

Next, the communication terminal receives a packet of number 6 in frame 6, and transmits an ACK signal for the packet of number 6 in frame 7 over the uplink. At this point, the communication terminal transmits the BTS selection signal (BTS1) and request packet number (packet number 8) with the ACK signal. When the communication terminal selects BTS1 in frames 7 and 8, BTS1 transmits downlink packets in frames 8 and 9.

Since BTS1 has recognized that a packet that the communication terminal requests is a packet of number 8, BTS1 transmits a packet of number 8 in frame 8 to the communication terminal. The communication terminal receives the packet of number 8, and transmits an ACK signal for the packet of number 8 in frame 9 over the uplink. At this point, the communication terminal transmits the BTS selection signal (BTS2) and request packet number (packet number 10) with the ACK signal.

Since BTS2 receives an erroneous ACK signal for the packet of number 8, BTS2 has prepared to transmit a packet of number 7. However, since BTS2 recognizes in frame 9 that a packet that the communication requests is a packet of number 10, BTS2 prepares the packet of number 10 in frame 10 and thereby is capable of transmitting the packet to the communication terminal. The communication terminal receives the packet of number 10, and transmits an ACK signal for the packet of number 10 in frame 11 over the uplink. In this way, regardless of mistaking a request packet number, BTS2 is capable of correcting the transmit order in transmitting the packet, thereby enabling acquisition of synchronization in transmission between BTS1 and BTS2.

It is assumed that the operation as described above is continued in frame 11 and thereafter.

In this case, an adaptive modulation pattern is transmitted to a new base station so that the new base station is capable of repeating a signal with the same adaptive modulation pattern. Thus, even when a first transmission of a newly selected base station is a repeat of a packet transmitted by a last selected base station, for example, when a base station transmitting downlink signals is switched and a packet to be repeated is requested because the last received packet is NG (erroneous), since an adaptive modulation pattern is transmitted to the new base station, the new base station is capable of repeating the signal with the same adaptive modulation pattern. Therefore, the communication terminal on a receiving side is capable of combining packets (combining soft decision values of previously received signals and a soft decision value of a repeated received signal to demodulate), and of improving the throughput. Accordingly, taking the foregoing into account, since it is not necessary to transmit an adaptive modulation pattern to a new base station except repeat, it is preferable not to transmit an adaptive modulation pattern when a received packet is OK (ACK) while transmitting the adaptive modulation pattern only when a received packet is NG (NACK). It is thereby possible to prevent the transmission of wasteful information bit and to improve spectral efficiency.

While this embodiment describes the case of using a packet number as the information for managing the transmit order, in the present invention other identification numbers may be used as the information for managing the transmit order.

### (Second embodiment)

This embodiment describes a method in which the communication terminal transmits periodically a check signal (information to manage the transmit order) indicative of reception state, instead of directly transmitting over the uplink a packet number that the terminal requests so as to manage the transmit order, and thus synchronization of the transmit order of packet numbers is acquired between base stations.

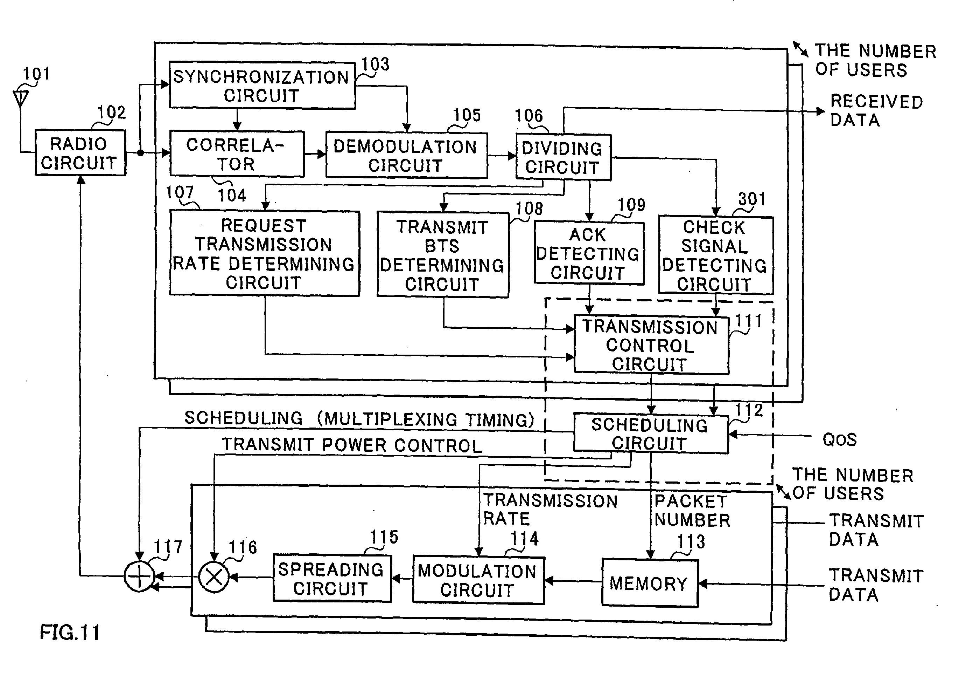

FIG.11 is a block diagram to explain a configuration of a base station apparatus in a fast packet transmission system according to the second embodiment of the present invention. In FIG. 11 the same elements as those in FIG. 7 are assigned the same reference numerals as in FIG.7 to omit specific descriptions thereof.

The base station apparatus illustrated in FIG.11 is provided with check signal detecting circuit 301, instead of packet number detecting circuit 110 in the base station apparatus illustrated in FIG.7. Check signal detecting circuit 301 detects a check signal (flag) divided from a received signal, and outputs the detected result to transmission control circuit 111.

The operation in the fast packet transmission system with the above configuration will be described below.

First, the communication terminal estimates channel state from a received signal, selects a base station which transmits a packet in a next transmission unit based on the estimated result, and determines a transmission rate (adaptive modulation pattern) for use in the transmission. Then, the communication terminal transmits the BTS selection signal and request rate to the base station. At this point, whenever the packet number proceeds by predetermined values, the communication terminal transmits the check signal (flag) indicative of the progress.

In the base station, based on the information on base station requested to transmit the packet divided from a received signal, a base station is determined that transmits a packet in the next transmission unit, and the information on the determined base station is output to transmission control circuit 111. The ACK signal divided from the received signal is detected, and the detected result it output to transmission control circuit 111. The check signal divided from the received signal is detected, and the detected result is output to transmission control circuit 111.

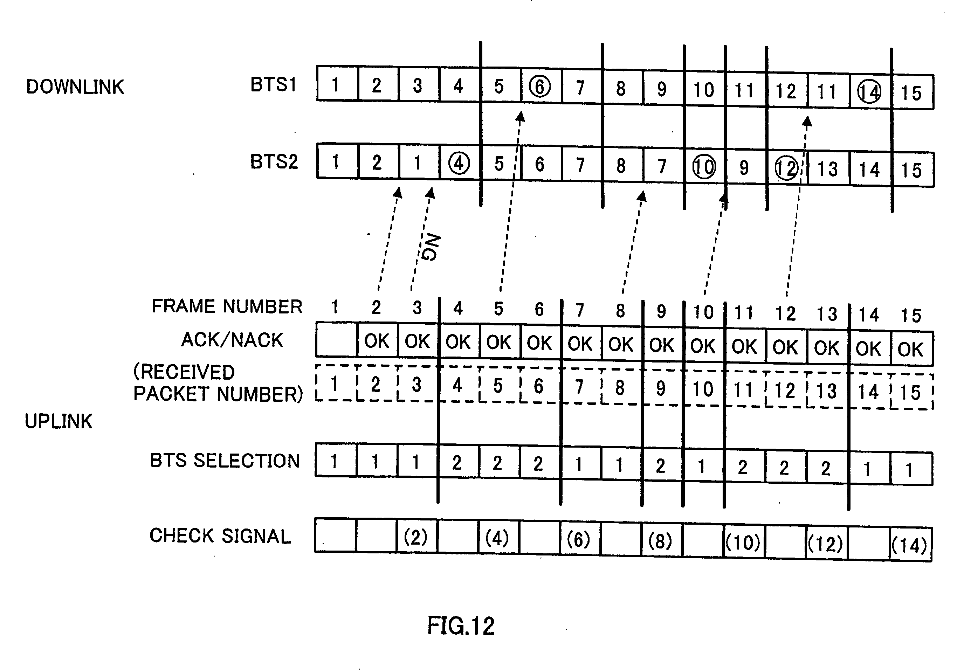

Transmission control circuit 111 controls transmission of data to be transmitted to the communication terminal, using the information on the determined base station, the result indicative of whether the ACK signal is detected, and the check signal. The transmission control will be described with reference to FIG.12. FIG.12 is a diagram to explain packet transmission states in the fast packet transmission system according to the second embodiment of the present invention. In order to clarify the description, it is herein assumed that the Go-Back-N scheme is used as a repeat error correcting algorithm, and that base station selection signals, downlink fast packet signals and check signals are transmitted without errors. It is further assumed herein that the communication terminal transmits the check signal every time the terminal receives packets of two correct numbers. An interval (the number of packets) at which the check signal is transmitted is not limited particularly. In FIG. 12, broken lines indicate that uplink ACK signals are not transmitted correctly to base stations. Thick lines indicate switching timings of base station selection by a communication terminal and timings at which the base stations transmitting downlink signals are switched with one-frame control delay based on the selection information. Circled number indicate corrected packet numbers.

In FIG.12, over the downlink, BTS1 selected due to good channel state transmits packets 1 to 4 in frames 1 to 4. The communication terminal receives a packet of number 1 in frame 1, and transmits an ACK signal for the packet of number 1 over the uplink.

It is assumed that this ACK signal arrives at BTS1 of good channel state without an error, while arriving at BTS2 of poor channel state with an error (leftward broken line as viewed in the figure). Since BTS2 has not received the ACK signal for the packet of number 1, BTS2 determines that the packet of number 1 does not reach the terminal, and prepares the packet of number 1 again in frame 3.

At this point, when the communication terminal receives packets of numbers 1 and 2 correctly, the terminal transmits check signal (2) in next frame 3. Since BTS2 is capable of recognizing that the communication terminal has received the packets of numbers 1 and 2 by receiving check signal (2) in frame 3, BTS2 corrects a number of a packet to be transmitted in a next transmission unit, and obtains packet number 4 in frame 4. In this way, regardless of mistaking a request packet number, BTS2 is capable of correcting the transmit order, thereby enabling acquisition of synchronization in transmission between BTS1 and BTS2.

When the communication terminal selects BTS2 in frames 4 to 6, BTS2 transmits downlink packets in frames 5 to 7. The communication terminal receives a packet of number 4 in frame 4, and transmits an ACK signal for the packet of number 4 in frame 5 over the uplink. It is assumed that this ACK signal arrives at BTS2 of good channel state without an error, while arriving at BTS1 of poor channel state with an error (third left broken line as viewed in the figure).

When the communication terminal receives packets of numbers 3 and 4 correctly, the terminal transmits check signal (4) in next frame 5. Since BTS1 is capable of recognizing that the communication terminal has received the packets of numbers 3 and 4 by receiving check signal (4) in frame 5, BTS1 is capable of correcting a number, which is originally 4 because the ACK signal is not received, of a packet to be transmitted in next transmission unit 6, to 6 in frame 6. In this way, regardless of mistaking a request packet number, BTS1 is capable of correcting the transmit order, thereby enabling acquisition of synchronization in transmission between BTS1 and BTS2.

It is assumed that the operation as described above is continued in frame 7 and thereafter.

Thus, even when the transmit order is not kept because an ACK signal is not received correctly, it is possible for base stations to correct the transmit order by check signal. Accordingly, even with overlap of packet number occurring to some extent, it is possible to recover a loss of synchronization, and to enable the communication terminal to receive packets of numbers in a predetermined range during a predetermined period. As a result, transmission delay is decreased, thereby improving the throughput.

While this embodiment describes the case that the check signal is transmitted over the uplink every time two packets are received correctly, it may be possible to provide a reset interval for acquiring synchronization of transmit order every a plurality of frames.

Further, by using this embodiment in a combination of the first embodiment, it is possible to correct a loss of synchronization of transmit order between base stations occurring due to transmission error of packet number in the first embodiment.

### (Third embodiment)

This embodiment describes a case of setting a transmission role between base stations and a control station so as to acquire synchronization of transmit order of packet numbers between the base stations, without the communication terminal and base stations do not communicate radio control signals such as signals indicative of packet numbers and check signals.

For example, in order for a base station to finish transmitting all the packets transmitted from a control station within a predetermined number of frames, there is provided a constrain (constrain for acquiring synchronization between base stations) in schedule management in base stations. In an extreme case, a control station transmits to a base station only on a packet-by-packet basis. Information on the constrain condition is, for example, input to scheduling circuit 112 in the base station apparatus illustrated in FIG.7 or FIG.11. Then, according to the information on the constrain condition, scheduling circuit 112 performs the transmit scheduling.

In this case, on the assumption that the same base station transmits a packet of a certain number, the base station performs the scheduling by multiplexing the packet on another channel and controlling the transmission rate. When the base station finishes transmitting the packet of a certain number and transmits a next packet after receiving a next BTS selection signal, the next packet is newly transmitted from the control station.

In this way, the transmit order does differ between base stations. Further, the control station treats a repeat packet as a new packet to transmit to a base station, and thereby a difference in order due to the repeat does not occur.

The scheme of this embodiment is capable of being carried out in a combination thereof with above embodiments 1 or 2. In other words, it is possible to achieve higher synchronization by introducing the above transmission role while communicating the control signal described in above embodiment 1 or 2.

The present invention is not limited to above embodiments 1 to 3, and is capable of being carried out with various modifications thereof. For example, while above embodiments 1 to 3 describe the case where two base stations are switched, the present invention is applicable to a case where three or more base stations are switched.

Further, while above embodiments 1 to 3 describe the case where the repeat error correcting algorithm is Go-Back-ARQ, the present invention is applicable similarly to a case of Stop And Wait ARQ, Selective Repeat ARQ, or Hybrid ARQ.

As described above, according to the present invention, in a system for performing downlink fast packet transmission efficiently by fast site selection diversity, added to a control signal is information for base stations to manage the packet transmit order, for example, an IP (Internet Protocol) packet number or a number newly assigned for radio transmission, each of the base stations manages the information individually, and thereby the base stations keep (acquire synchronization of) the packet transmit order. Thus, it is possible to control synchronization of transmit order such as packet number between base stations while providing each of the base stations with the scheduling function.

As a result, in fast packet transmission, it is possible to suppress a decrease in rate on a cell edge or corresponding to propagation environment, increase the throughput of transmission, suppress interference imposed on other stations, and achieve fast transmission per channel and an increased system capacity.

This application is based on the Japanese Patent Application No.2000-202035 filed on July 4, 2000.

### Industrial Applicability

The present invention is applicable to a fast packet transmission system in a digital radio communication system, and more particularly to a fast packet transmission system by site selection diversity.

## Claims

1. A fast packet transmission system
**characterized in that**
a communication terminal is adapted to transmit
base station selection information to a base station that the communication terminal has selected corresponding to the channel state, and
information to manage the transmit order to the base station over the uplink, and
the base station selected with the base station selection information is adapted to transmit a packet over the downlink according to the information to manage the transmit order.

2. The fast packet transmission system according to claim 1, wherein only when a base station that transmits a downlink signal is selected with the base station selection information, the information to manage the transmit order is transmitted to the base station.

3. The fast packet transmission system according to claim 1, wherein the information to manage the transmit order is at least one of a packet number and a check signal to be transmitted after a packet is received correctly.

4. The fast packet transmission system according to claim 1, wherein the communication terminal is adapted to transmit an adaptive modulation pattern with the information to manage the transmit order to the base station.

5. The fast packet transmission system according to claim 4, wherein only when a base station that transmits a downlink signal is selected with the base station selection information, the communication terminal is adapted to transmit the adaptive modulation pattern with the information to manage the transmit order to the base station.

6. The fast packet transmission system according to claim 4, wherein only when a base station that transmits a downlink signal is selected with the base station selection information and a repeat of a packet that is erroneous in last receiving the packet is requested to the selected base station, the communication terminal is adapted to transmit the adaptive modulation pattern with the information to manage the transmit order to the base station.

7. The fast packet transmission system according to claim 1, wherein the information to manage the transmit order is transmitted with transmit power higher than transmit power of other information.

8. The fast packet transmission according to claim 1, wherein the base station and a control station that is adapted to control the base station are provided with a restriction for synchronization, and based on the restriction, the base station is adapted to perform transmission.

9. A base station apparatus:
**characterized by**
receiving means (102) adapted to receive
base station selection information at the base station that a communication terminal has selected corresponding to the channel state, and
information to manage the transmit order;
transmission control means (111) adapted to control a packet to be transmitted, according to the information to manage the transmit order; and
transmitting means (102) adapted to transmit the packet output from the transmission control means when the base station apparatus is selected with the base station selection information.

10. A communication terminal :
**characterized by**
selecting means (209) adapted to select a base station that transmits a packet in a next transmission unit, corresponding to the channel state; and
transmitting means (202) adapted to transmit information to manage the transmit order with transmit data to the base station.

11. The communication terminal apparatus according to claim 10, wherein only when a base station that transmits a downlink signal is selected, the communication terminal apparatus is adapted to transmit the information to manage the transmit order to the base station.

## Patentansprüche

1. System zum schnellen Senden von Paketen,
**dadurch gekennzeichnet, dass**
ein Kommunikations-Endgerät so eingerichtet ist, dass es sendet:
eine Basisstationsauswahl-Information zu einer Basisstation, die das Kommunikations-Endgerät entsprechend dem Kanalzustand ausgewählt hat, und
eine Information zum Verwalten der Sendereihenfolge zu der Basisstation über die Uplink-Verbindung, und
die mit der Basisstationsauswahl-Information ausgewählte Basisstation so eingerichtet ist, dass sie ein Paket entsprechend der Information zum Verwalten der Sendereihenfolge über die Downlink-Verbindung sendet.

2. System zum schnellen Senden von Paketen nach Anspruch 1, wobei die Information zum Verwalten der Sendereihenfolge nur dann zu der Basisstation gesendet wird, wenn mit der Basisstationsauswahl-Information eine Basisstation ausgewählt wird, die ein Downlink-Signal sendet.

3. System zum schnellen Senden von Paketen nach Anspruch 1, wobei die Information zum Verwalten der Sendereihenfolge wenigstens eine Paket-Nummer oder ein Prüfsignal ist, das gesendet wird, nachdem ein Paket ordnungsgemäß empfangen worden ist.

4. System zum schnellen Senden von Paketen nach Anspruch 1, wobei das Kommunikations-Endgerät so eingerichtet ist, dass es ein adaptives Modulationsmuster mit der Information zum Verwalten der Sendereihenfolge zu der Basisstation sendet.

5. System zum schnellen Senden von Paketen nach Anspruch 4, wobei das Kommunikations-Endgerät so eingerichtet ist, dass es das adaptive Modulationsmuster mit der Information zum Verwalten der Sendereihenfolge nur dann zu der Basisstation sendet, wenn mit der Basisstations-Auswahlinformation eine Basisstation ausgewählt wird, die ein Downlink-Signal sendet.

6. System zum schnellen Senden von Paketen nach Anspruch 4, wobei das Kommunikations-Endgerät so eingerichtet ist, dass es das adaptive Modulationsmuster mit der Information zum Verwalten der Sendereihenfolge nur dann zu der Basisstation sendet, wenn mit der Basisstations-Auswahlinformation eine Basisstation ausgewählt wird, die ein Downlink-Signal sendet, und wenn eine Wiederholung eines Paketes, das beim letzten Empfangen des Paketes fehlerhaft ist, von der ausgewählten Basisstation angefordert wird.

7. System zum schnellen Senden von Paketen nach Anspruch 1, wobei die Information zum Verwalten der Sendereihenfolge mit einer Sendeleistung gesendet wird, die höher ist als eine Sendeleistung anderer Informationen.

8. System zum schnellen Senden von Paketen nach Anspruch 1, wobei die Basisstation und eine Steuerstation, die so eingerichtet ist, dass sie die Basisstation steuert, mit einer Einschränkung für Synchronisation versehen sind, und die Basisstation so eingerichtet ist, dass sie Senden auf Basis der Einschränkung durchführt.

9. Basisstationsvorrichtung,
**gekennzeichnet durch**
eine Empfangseinrichtung (102), die so eingerichtet ist, dass sie empfängt:
eine Basisstationsauswahl-Information an der Basisstation, die ein Kommunikations-Endgerät entsprechend dem Kanalzustand ausgewählt hat, und
eine Information zum Verwalten der Sendereihenfolge;
eine Sende-Steuereinrichtung (111), die so eingerichtet ist, dass sie ein zu sendendes Paket entsprechend der Information zum Verwalten der Sendereihenfolge steuert; und
eine Sendeeinrichtung (102), die so eingerichtet ist, dass sie das von der Sende-Steuereinrichtung ausgegebene Paket sendet, wenn die Basisstations-Vorrichtung mit der Basisstationsauswahl-Information ausgewählt wird.

10. Kommunikations-Endgerät,
**gekennzeichnet durch**
eine Auswähleinrichtung (209), die so eingerichtet ist, dass sie eine Basisstation, die ein Paket in einer nächsten Sendeeinheit sendet, entsprechend dem Kanalzustand auswählt; und
eine Sendeeinrichtung (202), die so eingerichtet ist, dass sie eine Information zum Verwalten der Sendereihenfolge mit Sendedaten zu der Basisstation sendet.

11. Kommunikations-Endgerätvorrichtung nach Anspruch 10, wobei die Kommunikations-Endgerätvorrichtung so eingerichtet ist, dass sie die Information zum Verwalten der Sendereihenfolge nur dann zu der Basisstation sendet, wenn eine Basisstation ausgewählt wird, die ein Downlink-Signal sendet.

## Revendications

1. Système de transmission rapide par paquets
**caractérisé en ce que**
un terminal de communication est adapté pour transmettre
des informations de sélection de station de base à une station de base que le terminal de communication a sélectionnée, correspondant à l'état du canal, et
des informations pour gérer l'ordre de transmission à la station de base via la liaison montante, et
la station de base sélectionnée avec les informations de sélection de station de base est adaptée pour transmettre un paquet via la liaison descendante selon les informations pour gérer l'ordre de transmission.

2. Système de transmission rapide par paquets selon la revendication 1, dans lequel seulement lorsqu'une station de base qui transmet un signal à liaison descendante est sélectionnée avec les informations de sélection de station de base, les informations pour gérer l'ordre de transmission sont transmises à la station de base.

3. Système de transmission rapide par paquets selon la revendication 1, dans lequel l'information pour gérer l'ordre de transmission est un numéro de paquet et/ou un signal de vérification à transmettre après qu'un paquet est reçu correctement.

4. Système de transmission rapide par paquets selon la revendication 1, dans lequel le terminal de communication est adapté pour transmettre un motif de modulation adaptatif avec les informations pour gérer l'ordre de transmission à la station de base.

5. Système de transmission rapide par paquets selon la revendication 4 dans lequel, seulement lorsqu'une station de base qui transmet un signal à liaison descendante est sélectionnée avec les informations de sélection de station de base, le terminal de communication est adapté pour transmettre le motif de modulation adaptatif avec les informations pour gérer l'ordre de transmission à la station de base.

6. Système de transmission rapide par paquets selon la revendication 4 dans lequel, seulement lorsqu'une station de base qui transmet un signal à liaison descendante est sélectionnée avec les informations de sélection de station de base et qu'une répétition d'un paquet qui est erroné lors de la dernière réception du paquet est requise par la station de base sélectionnée, le terminal de communication est adapté pour transmettre le motif de modulation adaptatif avec les informations pour gérer l'ordre de transmission à la station de base.

7. Système de transmission rapide par paquets selon la revendication 1, dans lequel les informations pour gérer l'ordre de transmission sont transmises avec une puissance de transmission plus élevée que la puissance de transmission d'autres informations.

8. Transmission rapide par paquets selon la revendication 1, dans laquelle la station de base et une station de contrôle qui est adaptée pour contrôler la station de base sont pourvues d'une restriction de synchronisation, et en fonction de la restriction, la station de base est adaptée pour effectuer la transmission.

9. Appareil de station de base :
**caractérisé par**
un moyen de réception (102) adapté pour recevoir
des informations de sélection de station de base à la station de base qu'un terminal de communication a sélectionnée, correspondant à l'état du canal, et
des informations pour gérer l'ordre de transmission ;
un moyen de contrôle de transmission (111) adapté pour contrôler un paquet à transmettre, selon les informations pour gérer l'ordre de transmission ; et
un moyen de transmission (102) adapté pour transmettre la sortie de paquet du moyen de contrôle de transmission lorsque l'appareil de station de base est sélectionné avec les informations de sélection de station de base.

10. Terminal de communication :
**caractérisé par**
un moyen de sélection (209) adapté pour sélectionner une station de base qui transmet un paquet dans une unité de transmission suivante, correspondant à l'état du canal ; et
un moyen de transmission (202) adapté pour transmettre des informations pour gérer l'ordre de transmission avec des données de transmission à la station de base.

11. Appareil à terminal de communication selon la revendication 10 dans lequel, seulement lorsqu'une station de base qui transmet un signal à liaison descendante est sélectionnée, l'appareil à terminal de communication est adapté pour transmettre les informations pour gérer l'ordre de transmission à la station de base.
